# EUROPÄISCHE PATENTSCHRIFT

(11) **EP 1 471 268 B1**
(45) Veröffentlichungstag und Bekanntmachung des Hinweises auf die Patenterteilung: **16.08.2006**
(21) Anmeldenummer: 04100520.8
(22) Anmeldetag: 11.02.2004
(51) Int. Cl.: F16B 31/00, F42B 3/00

(54) **Trennschraube**
Fracture bolt
Boulon à rupture

(30) Priorität: 23.04.2003 AT 28403 U
(43) Veröffentlichungstag der Anmeldung: 27.10.2004
(73) Patentinhaber: Hirtenberger Automotive Safety GmbH, 2552 Hirtenberg (AT)
(72) Erfinder: Marker, Ludwig, 2560, Grillenberg (AT); Schalko, Karl, Ing., 3163, Unterrohrbach (AT); Aigner, Kurt, 1130, Wien (AT)
(74) Vertreter: Müllner, Erwin

(56) Entgegenhaltungen:
- WO-A-00/34094
- DE-A- 10 127 483
- DE-U- 29 521 679
- US-A- 3 994 201

## Beschreibung

### Technisches Gebiet

Die vorliegende Erfindung betrifft eine Trennschraube nach dem Oberbegriff von Anspruch 1.

### Stand der Technik

Derartige Trennschrauben sind seit langer Zeit bekannt. Beispielsweise wird auf die DE 295 21 679 U1, die eine Basis für den Oberbegriff des Anspruchs 1 bildet, verwiesen. Sinn dieser Trennschrauben ist, dass einerseits eine zuverlässige Befestigung gesichert ist, die sich aber andererseits bei Bedarf in kürzester Zeit lösen lässt, indem die pyrotechnische Ladung im Inneren der Trennschraube gezündet wird.

In der **DE 22030470 A** ist auch bereits das Problem der Splitterbildung angesprochen. Es wird dort vorgeschlagen, die Sollbruchstelle nicht wie üblich außen an der Trennschraube, sondern innen im Bereich der pyrotechnischen Ladung als Kerbe auszubilden. Außerdem soll in der Bohrung der zu trennenden Teile eine Vorkerbung in der Ebene der Auflageflächen vorgesehen sein.

Wenn nun die eingebaute Trennschraube gezündet wird, wird diese derart verformt, dass eine Vernietung der beiden voneinander getrennten Teile der Trennschraube mit den zu trennenden Teilen erfolgt. Dadurch findet keine Splitterbildung statt, und die beiden voneinander getrennten Teile der Trennschraube werden nicht davongeschleudert.

Diese Vorteile ergeben sich aber nur, wenn die Trennschraube eingebaut ist. Vor dem Einbau ist sie im Falle einer Fehlzündung ebenso gefährlich wie herkömmliche Trennschrauben.

Aus der **DE 3803369 A** ist bekannt, ein Übungsgeschoß für Panzer zweigeteilt auszubilden, damit es während des Flugs geteilt werden kann, um dadurch die Reichweite zu verringern. Es ist erwähnt, dass die Trennstelle zwischen dem vorderen und dem hinteren Geschoßteil eine Sollbruchstelle aufweisen kann. Die ebenfalls erwähnte Schraubverbindung weist aber selbst keine pyrotechnische Ladung auf. Ähnliches gilt für die **DE 3048206 A** , wo bei einem Übungsgeschoß Bolzen mit Sollbruchstellen erwähnt sind.

### Offenbarung der Erfindung

### Technische Aufgabe

Es ist Aufgabe der vorliegenden Erfindung, eine Trennschraube zu schaffen, bei der keine Splitterbildung auftreten kann, bevor sie eingebaut ist.

### Technische Lösung

Diese Aufgabe wird durch eine Trennschraube der eingangs genannten Art erfindungsgemäß durch die kennzeichnenden Merkmale von Anspruch 1 gelöst.

Die Idee, die der Erfindung zu Grunde liegt, besteht also darin, dass die pyrotechnische Ladung zunächst nicht verdämmt ist. Wenn in diesem Zustand eine Fehlzündung auftritt, können die entstehenden Gase ungehindert entweichen. Die Trennschraube bricht nicht, und so können auch keine Splitter entstehen.

In diesem Zustand wird die Trennschraube eingebaut. Erst danach wird das Element eingesetzt, welches die Verdämmung bewirkt. Es ist dabei vorgesehen, dass dieses Element in die Öffnung des Schraubenkopfes ragt. Auf diese Weise ist eine missbräuchliche Verwendung (erst das Element zur Verdämmung einsetzen und dann die Trennschraube einbauen) unmöglich, weil das Werkzeug zum Eindrehen der Trennschraube bei verdämmter pyrotechnischer Ladung nicht mehr in die Öffnung eingesetzt werden kann. Falls notwendig, kann die Splitterwirkung im eingebauten Zustand beispielsweise gemäß der **DE 2203470 A** beseitigt werden.

Einer der Vorteile, der sich aus der vorliegenden Erfindung ergibt, besteht darin, dass diese Trennschrauben von geschultem Personal ohne Befähigungsnachweis nach dem Sprenggesetz eingebaut werden dürfen, weil diese pyrotechnischen Gegenstände nicht splittern.

Vorzugsweise ist das Element zur Verdämmung der pyrotechnischen Ladung eine Schraube, insbesondere eine Schraube mit Abreißkopf.

Bei Verwendung einer Schraube mit Abreißkopf lässt sich die Trennschraube überhaupt nicht mehr ausbauen. Bei Verwendung einer normalen Schraube ist ein Ausbau möglich, jedoch erst, nachdem diese normale Schraube wieder entfernt wurde. Damit fehlt aber wiederum die Verdämmung, sodass nun abermals keine Splitterwirkung auftreten kann.

### Kurze Beschreibung der Zeichnungen

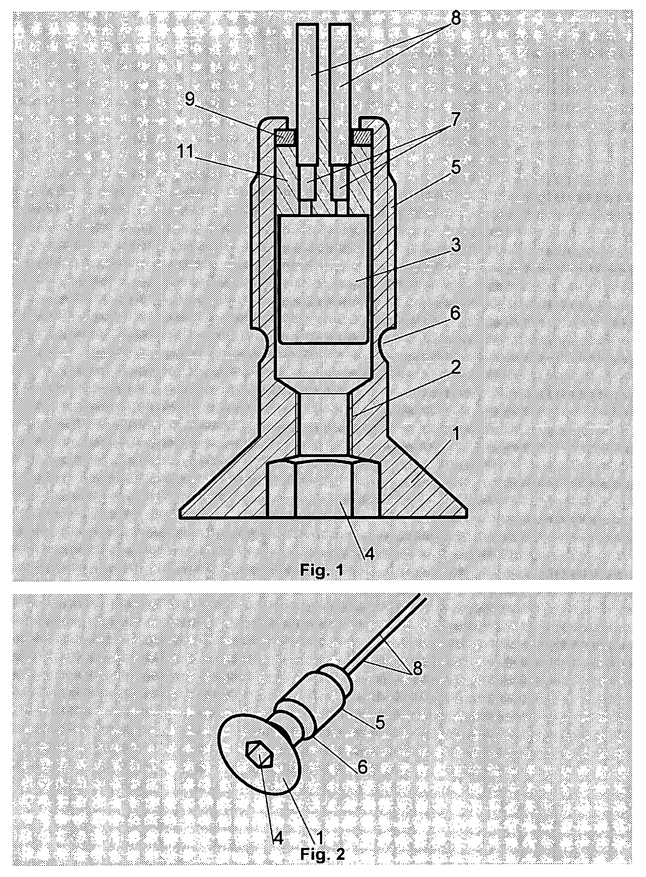

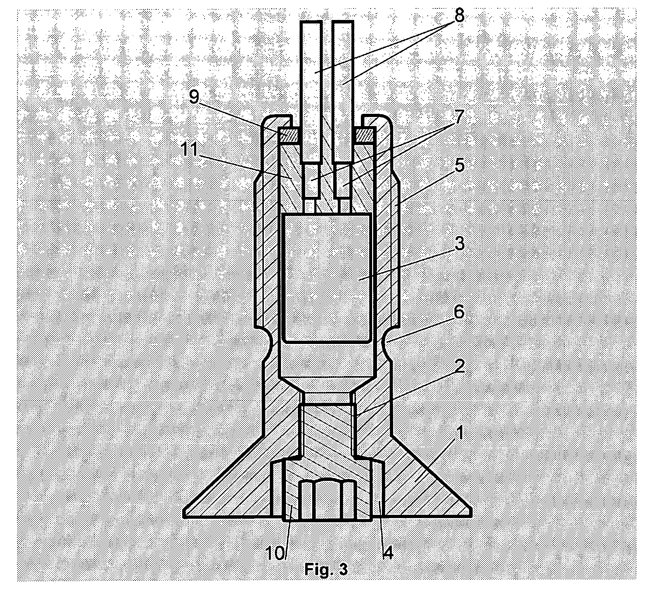

Anhand der beiliegenden Figuren wird die vorliegende Erfindung näher erläutert. Es zeigt: Fig. 1 eine erfindungsgemäße Trennschraube im Schnitt; Fig. 2 diese Trennschraube in perspektivischer Ansicht; und Fig. 3 eine Ansicht analog zu Fig. 1, jedoch mit eingesetzter Schraube zur Verdämmung.

### Beste Ausführungsform der Erfindung

Die Trennschraube weist einen Schraubenkopf 1 auf, in dem eine Öffnung 4 zum Ansetzen eines Werkzeugs vorgesehen ist. In diesem Fall ist die Öffnung 4 als Innensechskant ausgebildet. Es ist aber auch jede andere Form möglich. Die Trennschraube weist ein Gewinde 5 auf. Zwischen dem Schraubenkopf 1 und dem Gewinde 5 ist eine Sollbruchstelle 6 vorgesehen, die als Rille ausgebildet ist.

Im Inneren der Trennschraube ist eine pyrotechnische Ladung 3 samt Zünder vorgesehen. Sie weist Anschlüsse 7 auf, an die Leitungen 8 angeschlossen sind. Der Raum um die Anschlüsse 7 ist von einer Dichtmasse 11 umgeben. Diese wird gegenüber der pyrotechnischen Ladung 3 von einer Lochscheibe 9 abgeschlossen. Der Rand der Trennschraube ist um diese Lochscheibe 9 umgebördelt.

Auf der anderen Seite steht die Öffnung, in die die pyrotechnische Ladung 3 eingesetzt ist, über eine Bohrung 2 mit der Öffnung 4 in Verbindung. Die Bohrung 2 ist mit einem Gewinde versehen. Wenn die pyrotechnische Ladung in diesem Zustand infolge einer Fehlzündung detoniert, können die Gase einfach über die Bohrung 2 und die Öffnung 4 entweichen. Die Trennschraube bricht nicht, sodass auch keine Splitter entstehen können.

Erst wenn in die Bohrung 2 eine Schraube 10 eingeschraubt wird (siehe Fig. 3), ist die pyrotechnische Ladung 3 verdämmt und kann ihre geplante Wirkung entfalten. In diesem Zustand kann jedoch kein Werkzeug mehr in die Öffnung 4 eingesetzt werden, sodass die Trennschraube nicht mehr entfernt werden kann. Erst nachdem die Schraube 10 wieder herausgeschraubt wurde, kann die Trennschraube wieder ausgebaut werden. Es ist auf diese Weise sichergestellt, dass selbst bei einer Fehlzündung im ausgebauten Zustand keine Splitter entstehen können.

Die Schraube 10 kann auch mit einem Abreißkopf versehen sein. In diesem Fall kann die Trennschraube überhaupt nicht mehr ausgebaut werden. In Fig. 3 ist die Schraube 10 als Imbusschraube ausgeführt, es sind aber auch beliebige andere Formen denkbar.

## Patentansprüche

1. Trennschraube mit einem Schraubenkopf (1), einer pyrotechnischen Ladung (3), die mit einem Element (10) verdämmt ist, und einer Sollbruchstelle (6), wobei der Schraubenkopf (1) eine Öffnung (4) zur formschlüssigen Aufnahme eines Werkzeugs zum Eindrehen der Trennschraube aufweist, **dadurch gekennzeichnet, dass** das Element (10) zur Verdämmung der pyrotechnischen Ladung (3) in die Öffnung (4) des Schraubenkopfes (1) ragt, sodass die Aufnahme des Werkzeugs in der Öffnung (4) bei verdämmter pyrotechnischer Ladung (3) verhindert ist.

2. Trennschraube nach Anspruch 1, **dadurch gekennzeichnet, dass** das Element (10) zur Verdämmung der pyrotechnischen Ladung (3) eine Schraube (10) ist.

3. Trennschraube nach Anspruch 2, **dadurch gekennzeichnet, dass** das Element (10) zur Verdämmung der pyrotechnischen Ladung eine Schraube mit Abreißkopf ist.

## Claims

1. Fracture bolt comprising a bolt head (1), a pyrotechnic charge (3), which is plugged with an element (10), and a predetermined breaking point (6), wherein the bolt head (1) has an opening (4) for positive receiving of a tool for screwing in the fracture bolt, **characterised in that** the element (10) for plugging the pyrotechnic charge (3) projects into the opening (4) of the bolt head (1), so the tool is prevented from being received in the opening (4) when the pyrotechnic charge (3) is plugged.

2. Fracture bolt according to claim 1, **characterised in that** the element (10) for plugging the pyrotechnic charge (3) is a bolt (10).

3. Fracture bolt according to claim 2, **characterised in that** the element (10) for plugging the pyrotechnic charge is a bolt with a pull-off head.

## Revendications

1. Vis d'isolation comportant une tête de vis (1), une charge pyrotechnique (3) qui est fermée par un élément (10), et un emplacement (6) de rupture préférentielle, la tête de vis (1) présentant une ouverture (4) pour recevoir, en conjugaison de forme, un outil permettant de faire tourner la vis d'isolation, **caractérisée en ce que** l'élément (10) pour fermer la charge pyrotechnique fait saillie dans l'ouverture (4) de la tête de vis (1), de sorte à empêcher la réception de l'outil dans l'ouverture (4) lorsque la charge pyrotechnique est fermée.

2. Vis d'isolation selon la revendication 1, **caractérisée en ce que** l'élément (10) pour fermer la charge pyrotechnique (3) est une vis (10).

3. Vis d'isolation selon la revendication 2, **caractérisée en ce que** l'élément (10) pour fermer la charge pyrotechnique est une vis à tête apte à la rupture.
